**Europäisches Patentamt**

**European Patent Office**

**Office européen des brevets**

(19)

(11) **EP 0 951 598 B1**

(12) **EUROPÄISCHE PATENTSCHRIFT**

(45) Veröffentlichungstag und Bekanntmachung des Hinweises auf die Patenterteilung:
**20.03.2002 Patentblatt 2002/12**

(51) Int Cl.[7]: **D21C 5/02**

(86) Internationale Anmeldenummer:
**PCT/EP97/07172**

(21) Anmeldenummer: **97953876.6**

(22) Anmeldetag: **19.12.1997**

(87) Internationale Veröffentlichungsnummer:
**WO 98/30750 (16.07.1998 Gazette 1998/28)**

(54) **VERFAHREN ZUR ENTFERNUNG VON KAPSELÖLEN AUS SELBSTDURCHSCHREIBEPAPIER**

METHOD OF REMOVING CAPSULE OILS FROM SELF-COPYING PAPER

PROCEDE POUR EXTRAIRE DES HUILES DE CAPSULES DE PAPIER AUTOCOPIANT

(84) Benannte Vertragsstaaten:
**AT BE CH DE DK ES FI FR GB GR IT LI NL PT SE**

(30) Priorität: **07.01.1997 DE 19700253**

(43) Veröffentlichungstag der Anmeldung:
**27.10.1999 Patentblatt 1999/43**

(73) Patentinhaber: **Nopco Paper Technology Holding AS**
**3036 Drammen (NO)**

(72) Erfinder:
- **NELLESSEN, Bernhard**
  **D-41564 Kaarst (DE)**
- **HORNFECK, Klaus**
  **D-40822 Mettmann (DE)**
- **SCHRECK, Berthold**
  **D-40476 Düsseldorf (DE)**
- **HEINEN, Sabine**
  **D-40721 Hilden (DE)**
- **HILTERHAUS, Bodo**
  **D-41065 Mönchengladbach (DE)**
- **BAUMGARTEN, Dieter**
  **D-33719 Bielefeld (DE)**

(74) Vertreter: **Weiss, Wolfgang, Dipl.-Chem. Dr. et al**
**Weickmann & Weickmann**
**Patentanwälte**
**Postfach 86 08 20**
**81635 München (DE)**

(56) Entgegenhaltungen:
**EP-A- 0 050 494    EP-A- 0 717 144**
**US-A- 3 933 578    US-A- 4 162 186**
**US-A- 5 259 969**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

### Gebiet der Erfindung

Die Erfindung betrifft ein Verfahren zur Entfernung von Kapselölen aus Selbstdurchschreibepapier in Gegenwart von Niotensiden als Additiv. Die Erfindung betrifft darüber hinaus die Verwendung dieser Niotenside zur Entfernung von Kapselölen aus Selbstdurchschreibepapier.

### Stand der Technik

Zur Herstellung von beispielsweise Zeitungs- und Hygienepapieren werden heute in zunehmenden Maße Altpapiere eingesetzt. Eine spezielle Sorte dieser Altpapiere sind die sogenannten Selbstdurchschreibepapiere. Diese Selbstdurchschreibepapiere enthalten Mikrokapseln, in denen Farbstoffvorläufer und sogenannte Kapselöle vorhanden sind. Diese Kapselöle haben die Aufgabe, die innerhalb der Mikrokapseln vorhandenen Farbstoffvorläufer zu lösen und/oder zu dispergieren. Bei der Wiederaufbereitung von Selbstdurchschreibepapier werden nun die Mikrokapseln auf Grund der mechanischen Beanspruchung des Papiers beim Auflösevorgang zerstört und das Kapselöl wird freigesetzt.

Die Wiederaufbereitung von Selbstdurchschreibepapier wird üblicherweise, in zwei Teilschritten durchgeführt. Dabei ist der erste Schritt obligatorisch, der zweite fakultativ.

Der genannte erste Teilschritt der Wiederaufbereitung von Selbstdurchschreibepapier, das sogenannte Aufschlagen, kann wie folgt beschrieben werden: Unter Aufschlagen versteht der Fachmann allgemein den Prozeß der Zerfaserung von Altpapier - im vorliegenden Falle die Zerfaserung von Selbstdurchschreibepapier. Dieser Prozeß kann beispielsweise in wäßrigem Medium durch Zuführung mechanischer Energie, etwa durch Rühren, induziert werden. Diese Zerfaserung wird im Falle der Selbstdurchschreibepapiere begleitet von einer weitgehenden Zerstörung der darin befindlichen Mikrokapseln, wobei die darin befindlichen Kapselöle freigesetzt werden.

Im zweiten Schritt der Wiederaufbereitung wird die Papierstoff-Suspension einer Wäsche und/oder Flotation unterworfen.

Sofern der genannte Aufbereitungsprozeß in Abwesenheit spezieller Additive durchgerührt wird, werden die Kapselöle nach Untersuchungen der Anmelderin in einem Ausmaß von etwa 86% entfernt, wenn auf eine Wäsche und/oder Flotation verzichtet wird, in einem Ausmaß von etwa 94 %, wenn eine Wäsche und/oder Flotation erfolgt.

Wie andere Büro- und Administrationspapiere gelangen in zunehmendem Maße auch Selbstdurchschreibepapiere in den Recycling-Kreislauf. Aus hygienischen und fünktionellen Gründen ist es dabei wünschenswert, bei der Aufbereitung von Faserstoffen aus diesen Altpapieren einen möglichst hohen Austrag der in der Mikrokapselbeschichtung der Selbstdurchschreibepapiere enthaltenen Kapselöle zu erzielen. Damit werden beispielsweise unerwünschte Verfärbungen der aufbereiteten Faserstoffe oder ein Übergang von Kapselölen aus Papieren, die unter Verwendung dieser Faserstoffe hergestellt wurden, auf darin verpackte Lebensmittel verhindert. Dies ist insbesondere dann sehr wichtig, wenn die in den Selbstdurchschreibepapieren eingesetzten Öle aromatischer und/oder paraffinischer Natur sind, beispielsweise bei alkylierten Naphthalinen, alkylierten Biphenylen oder hydrierten Ölen auf Mineralölbasis.

Aus US-A-3 933 578 und US-A-5 259 969 ist die Recyclierung von sogenannten Selbstdurchschreibepapieren durch Aufschlagen einer Papierstoff-suspension bekannt. Gemäß der Offenbarung dieser Druckschriften wird das Aufschlagen des Altpapiers in Gegenwart eines nichtionischen Tensids durchgeführt. Das gemäß der Lehre der vorliegenden Anmeldung einzusetzende Additiv wird in diesen Druckschriften jedoch nicht beschrieben.

### Beschreibung der Erfindung

Aufgabe der vorliegenden Erfindung war es, ein Verfahren zur Entfernung von Kapselölen aus Selbstdurchschreibepapier zur Verfügung zu stellen, das sich durch einen verbesserten Austrag an Kapselölen auszeichnet. Insbesondere sollte der Kapselöl-Austrag bei der Wiederaufbereitung von Selbstdurchschreibepapieren mindestens 90% betragen.

Überraschenderweise wurde nun gefunden, daß die genannte Aufgabe in ausgezeichneter Weise gelöst wird, wenn man bei der Wiederaufbereitung von Selbstdurchschreibepapier als Additiv nichtionische Tenside (Niotenside) einsetzt. Als besonders geeignet haben sich dabei Anlagerungsprodukte von Ethylenoxid und/oder Propylenoxid an Alkohole mit im wesentlichen 12 bis 14C-Atomen erwiesen.

Gegenstand der vorliegenden Erfindung ist daher zunächst ein Verfahren zur Entfernung von Kapselölen aus Selbstdurchschreibepapier, wobei man Selbstdurchschreibepapier zu einer Papierstoff-Suspension aufschlägt und diese gewünschtenfalls einer Wäsche und/oder Flotation unterwirft und wobei man das Aufschlagen und/oder die Wäsche und/oder Flotation in Gegenwart mindestens eines Additivs durchführt, das ausgewählt ist aus der Gruppe der Anlagerungsprodukte von Ethylenoxid (Eo) und/oder Propylenoxid (Po) und/oder EO/PO an Alkohole mit 12 bis 14 C-Atomen.

Bei den **Alkoholethoxylaten** gilt die Maßgabe, daß der Anteil an EO im Molekül im Mittel im Bereich von 2 bis 20 mol - bezogen auf 1 mol Alkohol - beträgt.

Bei den **Alkoholpropoxylaten** gilt die Maßgabe, daß der Anteil an PO im Molekül im Mittel im Bereich von 2 bis 20 mol - bezogen auf 1 mol Alkohol - beträgt.

Bei den **EO/PO-Addukten** gilt die Maßgabe, daß

a) die Summe von EO und PO im Mittel im Bereich von 2 bis 20 mol - bezogen auf 1 mol Alkohol - beträgt und

b) EO und PO in den Anlagerungsprodukten in Molverhältnissen im Bereich von 1:10 bis 10:1 vorliegen.

In einer bevorzugten Ausführungsform der vorliegenden Erfindung setzt man Fettalkoholethoxylate als Additive ein, entweder allein oder in Mischung. Dabei werden die den EO- und/oder PO-Addukten zu Grunde liegenden Fettalkohole so gewählt, daß sie im wesentlichen 12 bis 14 C-Atome umfassen.

Die Menge des Additivs wird üblichweise im Bereich von 0,1 bis 5 Gew.-% - bezogen auf den Eintrag an aufzubereitendem Papier - eingestellt. Es liegt aber im Einzelfall im Ermessen des Fachmanns, auch geringere oder größere Mengen an Additiv einzusetzen. Dies hängt im Einzelfall im wesentlichen von der Natur und Menge des auszutragenden Öls ab, ferner von der Art des Selbstdurchschreibepapiers und der Stoffdichte im Pulper und beim Waschen.

Die nachfolgenden Beispiele dienen der Erläuterung der Erfindung und sind nicht einschränkend zu verstehen.

**Beispiele**

**Eingesetzte Additive**

a) **LS3:** Anlagerungsprodukt von 3 mol EO an 1 mol eines Fettalkohols mit 12-14 C-Atomen ("Dehydol LS3", Handelsprodukt der Anmelderin)

b) **LS54:** Anlagerungsprodukt von 5 mol EO und 4 mol PO an 1 mol eines Fettalkohols mit 12-14 C-Atomen ("Dehydol LS54", Handelsprodukt der Anmelderin)

**Versuchsbeschreibung**

Folgende den Fachmann bekannten Verfahrensschritte wurden sukzessive durchgeführt:

a) Aufschlagen und Auflösen des Prüfpapiers
b) Laborwäsche des aufgelösten Prüfpapiers
c) Rapid-Köthen-Blattbildung
d) Extraktion mit Dichlormethan

2. Versuchsbedingungen:

2.1 Aufschlagen und Auflösen des Prüfpapiers

| | |
|---|---|
| Prüfpapier: | 100% Selbstdurchschreibepapier der Firma Stora Carbonless Paper GmbH (Typ "Giroform"); es handelt sich dabei um eine Mischung aus CB- und CFB-Papier (CB = coated back [mit Kapselstrich], CFB = coated front and back [Rückseite Kapselstrich]) |
| Pulper: | Typ Horbart Kitchen Aid (=Dickstoffpulper) |
| Dauer: | 15 Minuten |
| Temperatur: | 45 °C |
| Stoffdichte: | 20% |
| **Additiv:** | Das jeweils untersuchte Additiv wurde zu Beginn des Auflösevorgangs zudosiert. Vergleiche hierzu auch Tabelle 1. |

## 2.2 Laborwäsche

Für die Laborwäsche des aufgeschlagenen Prüfpapiers wurde die Stoffdichte durch Verdünnen mit Wasser von 20% auf 1% verringert. Die Wäsche wurde in einer Laborwaschzelle durchgeführt (Bauart: Degussa: Dauer: 10 Minuten; Temperatur: 45 °C). Der Wasserdurchsatz betrug dabei 1 Liter pro Minute.
Die Versuche wurden jeweils mit und ohne Laborwäsche durchgeführt. Einzelheiten gehen aus Tabelle 1 hervor.

## 2.3 Rapid-Köthen-Blattbildung

Nach Beendigung des Waschvorganges wurde eine Probe der wäßrigen Fasersuspension mit einem Stoffgehalt von etwa 2,5 Gew.-% entnommen und zur Blattbildung nach Rapid-Köthen herangezogen. (Die Blattbildung nach Rapid-Köthen ist dem Fachmann literaturbekannt, vergleiche zum Beispiel in: "Handbuch der Papier- und Pappenfabrikation", zweite Auflage, Band I, Niederwalluf 1971, Seite 1484.

## 2.4 Extraktion mit Dichlormethan

Der Kapselölanteil im Papier wurde durch Extraktion mit Dichlormethan nach der in DIN 54354 beschriebenen Methode ermittelt und nach folgender Formel berechnet:

$$\text{Anteil Kapselöl in Prozent} = 100(A-B)/A$$

Dabei bedeuten:

A: Dichlormethan-Extrakt-unbehandeltes Papier in %, bezogen auf Papiereinwaage
B: Dichlormethan-Extrakt-behandeltes Papier in %, bezogen auf Papiereinwaage

**Ergebnisse**

Die Versuchsergebnisse sind zusammenfassend in Tabelle 1 dargestellt. Es zeigte sich, daß durch den Einsatz der erfindungsgemäßen Niotenside als Additive eine erhebliche Verbesserung des Kapselölaustrags erreicht wird.

Tabelle 1:

| Kapselölaustrag | | | | | |
|---|---|---|---|---|---|
| Beispiel | Dickstofpulper | Wäsche | Additiv Menge[a) | Art | Kapselölaustrag |
| V-1 | ja | nein | ohne | | 86% |
| B-1a | ja | nein | 0,3% | 30% LS3, 70% LS54 | 91% |
| B-1b | ja | nein | 0,3% | 70% LS3, 30% LS54 | 94% |
| V-2 | ja | ja | ohne | | 94% |
| B-2a | ja | ja | 0,3% | 30% LS3, 70% LS54 | 94% |
| B-2b | ja | ja | 0,3% | 70% LS3, 30% LS54 | 98% |

[a) %-Angaben sind bezogen auf Papiereintrag atro ("atro" ist für den Fachmann die Abkürzung für "absolut trocken")

**Patentansprüche**

**1.** Verfahren zur Entfernung von Kapselölen aus Selbstdurchschreibepapier, wobei man Selbstdurchschreibepapier zu einer Papierstoff-Suspension aufschlägt und diese gewünschtenfalls einer Wäsche und/oder Flotation unterwirft, **dadurch gekennzeichnet, daß** man das Aufschlagen und/oder die Wäsche und/oder Flotation in Gegenwart mindestens eines Additivs durchführt, das ausgewählt ist aus der Gruppe der Anlagerungsprodukte von Ethylenoxid (EO) und/oder Propylenoxid (PO) und/oder EO/PO an Alkohole mit 12 bis 14 C-Atomen.

**2.** Verfahren nach Anspruch 1, wobei man Alkoholethoxylate einsetzt, mit der Maßgabe, daß der Anteil an EO im Molekül im Mittel im Bereich von 2 bis 20 mol - bezogen auf 1 mol Alkohol - beträgt.

3.  Verfahren nach Anspruch 1, wobei man Alkoholpropoxylate einsetzt, mit der Maßgabe, daß der Anteil an PO im Molekül im Mittel im Bereich von 2 bis 20 mol - bezogen auf 1 mol Alkohol - beträgt.

4.  Verfahren nach Anspruch 1, wobei man EO/PO-Addukte einsetzt, mit der Maßgabe, daß

    a) die Summe von EO und PO im Mittel im Bereich von 2 bis 20 mol - bezogen auf 1 mol Alkohol - beträgt und
    b) EO und PO in den Anlagerungsprodukten in Molverhältnissen im Bereich von 1:10 bis 10:1 vorliegen.

5.  Verfahren nach den Ansprüchen 1 bis 4, wobei man Mischungen von Alkoholethoxylaten und EO/PO-Addukten einsetzt.

6.  Verwendung von Anlagerungsprodukten von Ethylenoxid (EO) und/oder Propylenoxid (PO) und/oder EO/PO an Alkohole mit 12 bis 14 C-Atomen als Additive zur Entfernung von Kapselölen aus Selbstdurchschreibepapier.


**Claims**

1.  Process for removing capsule oils from non-carbon paper, non-carbon paper being broken down into a pulp suspension and this optionally being subjected to a washing process and/or floatation, **characterised in that** the breaking down and/or the washing process and/or floatation is carried out in the presence of at least one additive which is selected from the group of addition products comprising ethylene oxide (EO) and/or propylene oxide (PO) and/or EO/PO on alcohols with 12 to 14 C atoms.

2.  Process according to claim 1, wherein alcohol ethoxylates are used with the proviso that the EO content in the molecule is, on average, in the range of 2 to 20 mol, based on 1 mol alcohol.

3.  Process according to claim 1, wherein alcohol propoxylates are used with the proviso that the PO content in the molecule is, on average, in the range of 2 to 20 mol, based on 1 mol alcohol.

4.  Process according to claim 1, wherein EO/PO adducts are used with the proviso that

    a) the sum of EG and PO is, on average, in the range of 2 to 20 mol, based on 1 mol alcohol and

    b) EO and PO are present in the addition products in molar ratios in the range of 1:10 to 10:1.

5.  Process according to claims 1 to 4, wherein mixtures of alcohol ethoxylates and EO/PO adducts are used.

6.  Use of addition products of ethylene oxide (EO) and/or propylene oxide (PO) and/or EO/PO on alcohols with 12 to 14 C atoms as additives to remove capsule oils from non-carbon paper.


**Revendications**

1.  Procédé pour extraire des huiles de capsules de papier autocopiant selon lequel on broie le papier autocopiant pour obtenir une suspension de pâte de papier et selon lequel on soumet éventuellement celle-ci à un lavage et/ou à un flottage, **caractérisé en ce que** le broyage et/ou le lavage et/ou le flottage est réalisé en présence d'au moins un additif choisi parmi le groupe des produits de fixation comprenant l'oxyde d'éthylène (OE) et/ou l'oxyde de propylène (OP) et/ou OE/OP sur des alcools comportant de 12 à 14 atomes de C.

2.  Procédé selon la revendication 1 selon lequel on utilise des éthoxylates d'alcool dans des proportions telles que la part d'OE dans la molécule se monte en moyenne à une quantité comprise entre 2 et 20 moles sur la base de 1 mole d'alcool.

3.  Procédé selon la revendication 1 selon lequel on utilise des propoxylates d'alcool dans des proportions telles que la part d'OP dans la molécule se monte en moyenne à une quantité comprise entre 2 et 20 moles sur la base de 1 mole d'alcool.

4.  Procédé selon la revendication 1 selon lequel on utilise des produits d'addition OE/OP dans des proportions telles que

a) la somme d'OE et d'OP se monte en moyenne à une quantité comprise entre 2 et 20 moles sur la base de 1 mole d'alcool et
b) l'OE et l'OP dans les produits de fixation se trouvent dans un rapport molaire allant de 1:10 à 10:1.

5. Procédé selon les revendications 1 à 4 selon lequel on utilise des mélanges d'éthoxylates d'alcool et de produits d'addition OE/OP.

6. Utilisation de produits de fixation de l'oxyde d'éthylène (OE) et/ou de l'oxyde de propylène (OP) et/ou de OE/OP sur des alcools comportant de 12 à 14 atomes de C en tant qu'additifs pour extraire des huiles de capsules de papier autocopiant.